# FASCICULE DE BREVET EUROPEEN

(11) **EP 3 052 770 B1**
(45) Date de publication et mention de la délivrance du brevet: **22.11.2017**
(21) Numéro de dépôt: 14789316.8
(22) Date de dépôt: 29.09.2014
(51) Int. Cl.: F01D 25/10, F01D 25/36, F01D 25/18, F02C 7/06

(54) **TURBOMACHINE ADAPTEE A FONCTIONNER EN MODE VIREUR**
FÜR DEN BETRIEB IN EINEM DREHGETRIEBEMODUS AUSGELEGTE TURBOMASCHINE
TURBOMACHINE DESIGNED TO OPERATE IN TURNING GEAR MODE

(30) Priorité: 30.09.2013 FR 1359439
(43) Date de publication de la demande: 10.08.2016
(73) Titulaire: Safran Helicopter Engines, 64510 Bordes (FR)
(72) Inventeur: THIRIET, Romain, F-64110 Jurancon (FR); POUMAREDE, Vincent, F-65000 Tarbes (FR); SERGHINE, Camel, F-64510 Boeil-Bezing (FR)
(74) Mandataire: Calvo de Nó, Rodrigo
(86) Numéro de dépôt international: PCT/FR2014/052443
(87) Numéro de publication internationale: WO 2015/044613

(56) Documents cités:
- EP-A2- 1 662 636
- WO-A2-2012/059671
- FR-A1- 2 915 238
- GB-A- 1 044 795
- US-A- 2 388 523
- US-A1- 2006 260 323

## Description

### Arrière-plan de l'invention

La présente invention concerne le domaine des turbomachines et en particulier leur lubrification.

On entend par « turbomachine », dans le présent contexte, toute machine permettant la conversion de l'énergie thermique d'un fluide de travail en énergie mécanique par détente dudit fluide de travail dans une turbine. Plus particulièrement, ce fluide de travail peut être un gaz de combustion résultant de la réaction chimique d'un combustible avec de l'air dans une chambre de combustion, après la compression de cet air dans un compresseur actionné par la turbine à travers un premier arbre rotatif. Ainsi, les turbomachines, telles que comprises dans le présent contexte, comprennent les turboréacteurs à flux simple ou double, les turbopropulseurs, les turbomoteurs ou les turbines à gaz, entre autres. Dans la description qui suit, les termes "amont" et "aval" sont définis par rapport au sens de circulation normal du fluide de travail dans la turbomachine.

Afin de diminuer la consommation de carburant sur des groupes multimoteurs, il a été proposé, notamment dans la demande de brevet français FR 2 967 132 A1, d'éteindre la chambre de combustion d'une ou plusieurs turbomachines en régime de croisière, la ou les turbomachines restantes fonctionnant de ce fait à des niveaux de régimes plus élevés offrant une meilleure consommation spécifique. Dans le but d'accélérer le redémarrage, notamment pour permettre un éventuel démarrage en urgence pour remplacer ou soutenir une autre source de puissance en défaillance, il a également été proposé, dans la demande de brevet français FR 2 967 132 A1, de maintenir en rotation, grâce à un dispositif d'actionnement dudit premier arbre rotatif, lesdits turbine et compresseur de la ou les turbomachines dont la chambre de combustion est éteinte. Toutefois, dans un tel mode de veille, dit mode vireur, le lubrifiant n'est plus réchauffé par les pertes de la turbomachine et, en fonction des conditions atmosphériques, notamment en altitude ou par temps froid, sa température est susceptible de descendre rapidement à des valeurs très basses, jusqu'à un niveau où une lubrification correcte de la turbomachine ne serait plus assurée. Or, une des limitations d'emploi inhérentes à de telles turbomachines réside dans la nécessité de disposer d'une lubrification adéquate avant qu'elle ne soit en mesure de délivrer de la puissance sur l'arbre de puissance, ce qui impose une température minimale du lubrifiant, usuellement de l'ordre de 273 K à 278 K en fonction du lubrifiant. On voit donc que, pour une turbomachine maintenue en mode vireur avec la chambre de combustion éteinte, il est souhaitable de maintenir le lubrifiant à au moins une température minimale.

On connait des documents FR 2 915 238, GB 1 044 795 et US 2 388 523 des turbomachines comportant des sources chaudes électriques réchauffant le lubrifiant du turbomoteur

### Objet et résumé de l'invention

L'invention vise à remédier à ces inconvénients. En particulier, la présente divulgation vise à proposer une turbomachine pouvant être maintenue en mode vireur même à des températures très basses, tout en continuant à assurer sa lubrification avec un lubrifiant à température et viscosité appropriées.

Dans au moins un mode de réalisation, ce but est atteint grâce au fait que, dans une telle turbomachine comprenant au moins un compresseur, une chambre de combustion située en aval du compresseur pour la combustion d'un mélange d'air provenant du compresseur et de carburant, une première turbine pour la détente de gaz de combustion provenant de la chambre de combustion et l'entraînement du compresseur à travers un premier arbre rotatif, un dispositif d'actionnement dudit premier arbre rotatif pour maintenir en rotation la première turbine et le compresseur avec la chambre de combustion éteinte, et un circuit de lubrification de la turbomachine, ce dernier étant disposé de manière à lubrifier au moins un palier dudit premier arbre rotatif, et traversant au moins une source chaude comprenant au moins un consommateur électrique apte à convertir de l'énergie électrique au moins partiellement en chaleur pour réchauffer un lubrifiant dans ledit circuit de lubrification quand la température du lubrifiant descend en dessous d'un premier seuil prédéterminé pendant la rotation de la première turbine et du compresseur avec la chambre de combustion éteinte.

Grâce à ces dispositions, le lubrifiant peut être maintenu à une température suffisante en mode vireur pour assurer une lubrification adéquate de la turbomachine, même à des températures ambiantes très basses.

En particulier, la source chaude peut comprendre le dispositif d'actionnement du premier arbre rotatif. Si ce dispositif comprend, par exemple, une machine électrique, telle qu'un moteur générateur, couplée mécaniquement à l'arbre rotatif, son fonctionnement peut générer suffisamment de chaleur pour assurer le réchauffement du lubrifiant. En outre, si ledit dispositif d'actionnement comprend en outre un convertisseur de puissance pour l'alimentation électrique de ladite machine électrique, son fonctionnement peut également générer suffisamment de chaleur pour assurer le réchauffement du lubrifiant. Dans tous les cas, l'évacuation de cette chaleur du dispositif d'actionnement par le lubrifiant circulant à travers le circuit de lubrification permet aussi d'assurer le refroidissement de ce dispositif d'actionnement, refroidissement qui peut être nécessaire ou au moins avantageux au vu de la puissance mécanique fournie par ce dispositif d'actionnement.

D'autre part, ladite source chaude peut comprendre un échangeur de chaleur pour transmettre la chaleur au lubrifiant dans le circuit de lubrification.

Encore une autre possibilité envisageable comme source chaude serait une résistance électrique. Une telle résistance électrique pourrait être facilement intégrée dans le circuit de lubrification, par exemple noyée dans un réservoir de lubrifiant formant part du circuit. Elle serait facilement activable et désactivable à travers son alimentation électrique, ce qui simplifierait la régulation thermique précise du lubrifiant.

Afin de réguler la température du lubrifiant, le circuit de lubrification peut aussi comprendre un conduit obturable de contournement de la source chaude. Pour son obturation en réponse à un besoin de réchauffement du lubrifiant, ce conduit obturable peut comprendre, par exemple, un clapet thermostatique ou une vanne connectée à une unité de commande.

Afin d'obtenir une plus grande puissance thermique et/ou de faciliter la régulation du réchauffement du lubrifiant, le circuit de lubrification peut traverser au moins deux sources chaudes aptes à réchauffer le lubrifiant dans ledit circuit pendant la rotation desdits turbine et compresseur avec la chambre de combustion éteinte. Ces deux sources chaudes peuvent être arrangées en parallèle, afin de minimiser les pertes de charge dans le circuit de lubrification, ou en série, afin de faciliter la régulation thermique du circuit.

Bien qu'en mode vireur la turbomachine puisse nécessiter un réchauffement du lubrifiant, son refroidissement peut devenir souhaitable après allumage de la chambre de combustion. Pour permettre cela, le circuit de lubrification peut traverser aussi au moins une source froide pour le refroidissement du lubrifiant avec la chambre de combustion allumée. Afin de permettre aussi la régulation thermique du circuit de lubrification dans cette situation, le circuit peut aussi comprendre un conduit obturable de contournement de cette source froide. Comme le conduit de contournement de la source chaude, cet autre conduit de contournement peut être équipé d'un clapet thermostatique ou d'une vanne connectée à une unité de commande pour son obturation en réponse à un besoin de refroidissement du lubrifiant.

Cette turbomachine peut notamment être du type turbomoteur ou turbopropulseur, et donc comporter, en outre, une deuxième turbine, disposée en aval de la première turbine et couplée mécaniquement à un arbre de prise de puissance.

La présente divulgation se rapporte aussi à un groupe moteur comprenant au moins la première turbomachine susmentionnée et une deuxième turbomachine, ainsi qu'à un aéronef équipé d'un tel groupe moteur. Il est ainsi possible de maintenir la première turbomachine en mode vireur, pendant un fonctionnement normal de la deuxième turbomachine, et allumer la chambre de combustion de la première turbomachine pour fournir un supplément de puissance à la deuxième turbomachine. Bien sûr, ce groupe moteur peut comprendre un nombre supérieur à deux turbomachines, comme par exemple trois, voire plus.

En outre, la présente divulgation se rapporte aussi à un procédé de régulation thermique d'un lubrifiant dans un circuit de lubrification d'une turbomachine comprenant au moins un compresseur, une chambre de combustion située en aval du compresseur pour la combustion d'un mélange d'air provenant du compresseur et de carburant, une première turbine pour la détente de gaz de combustion provenant de la chambre de combustion et l'entraînement du compresseur à travers un premier arbre rotatif, et un dispositif d'actionnement dudit premier arbre rotatif, dans lequel ledit lubrifiant, servant à lubrifier au moins un palier dudit premier arbre rotatif, est dirigé à travers une source chaude traversée par ledit circuit de lubrification et comprenant au moins un consommateur électrique convertissant de l'énergie électrique au moins partiellement en chaleur pour réchauffer le lubrifiant quand la température du lubrifiant descend en dessous d'un premier seuil prédéterminé pendant que la première turbine et le compresseur sont maintenus en rotation par ledit dispositif d'actionnement avec la chambre de combustion éteinte. En outre, ledit lubrifiant peut être dirigé à travers une source froide traversée par ledit circuit pour son refroidissement quand la température du lubrifiant excède un deuxième seuil prédéterminé avec la chambre de combustion allumée.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 illustre schématiquement un aéronef avec un groupe moteur comportant deux turbomachines ;
- la figure 2 illustre plus spécifiquement ce groupe moteur ;
- la figure 3 illustre schématiquement le circuit de lubrification, suivant un premier mode de réalisation, d'une des turbomachines du groupe moteur de la figure 2 ;
- la figure 3A illustre l'écoulement du lubrifiant à travers le circuit de lubrification de la figure 3 sous un premier seuil de température ;
- la figure 3B illustre l'écoulement du lubrifiant à travers le circuit de lubrification de la figure 3 entre le premier seuil de température et un deuxième seuil de température ;
- la figure 3C illustre l'écoulement du lubrifiant à travers le circuit de lubrification de la figure 3 au-dessus du deuxième seuil de température ;
- les figures 4A à 4E illustrent l'arrangement d'une source chaude dans le circuit de lubrification de la figure 3, suivant différentes variantes alternatives ;
- la figure 5 est un ordinogramme illustrant schématiquement un procédé de régulation du circuit de lubrification de la figure 3 ;
- la figure 6 est un graphique illustrant l'ouverture et fermeture de vannes de contournement suivant le procédé de la figure 5 ;
- la figure 7 illustre schématiquement le circuit de lubrification, suivant un deuxième mode de réalisation, d'une des turbomachines du groupe moteur de la figure 2 ;
- la figure 8 est un ordinogramme illustrant schématiquement un procédé de régulation du circuit de lubrification de la figure 7 ;
- la figure 9 est un graphique illustrant l'activation et désactivation d'une alimentation électrique et l'ouverture et fermeture de vannes de contournement suivant le procédé de la figure 8 ;
- la figure 10 illustre schématiquement le circuit de lubrification, suivant un troisième mode de réalisation, d'une des turbomachines du groupe moteur de la figure 2 ;
- la figure 11 est un ordinogramme illustrant schématiquement un procédé de régulation du circuit de lubrification de la figure 8 ;
- la figure 12 est un graphique illustrant l'ouverture et fermeture de vannes de contournement suivant le procédé de la figure 11 ;
- la figure 13 illustre schématiquement le circuit de lubrification, suivant un quatrième mode de réalisation, d'une des turbomachines du groupe moteur de la figure 2 ;
- la figure 14 illustre schématiquement le circuit de lubrification, suivant un cinquième mode de réalisation, d'une des turbomachines du groupe moteur de la figure 2 ;
- la figure 15 illustre schématiquement le circuit de lubrification, suivant un sixième mode de réalisation, d'une des turbomachines du groupe moteur de la figure 2 ; et
- la figure 16 illustre schématiquement le circuit de lubrification, suivant un septième mode de réalisation, d'une des turbomachines du groupe moteur de la figure 2.

### Description détaillée de l'invention

La première figure illustre un aéronef 1 à voilure tournante, plus spécifiquement un hélicoptère avec un rotor principal 2 et un rotor de queue anti-couple 3 couplés à un groupe moteur 4 pour leur actionnement. Le groupe moteur 4 illustré comprend une première turbomachine 5a et une deuxième turbomachine 5b. Plus spécifiquement, ces turbomachines 5a,5b sont des turbomoteurs dont les arbres de prise de puissance 6 sont tous les deux reliés à une boîte de transmission principale 7 pour actionner le rotor principal 2 et le rotor de queue 3.

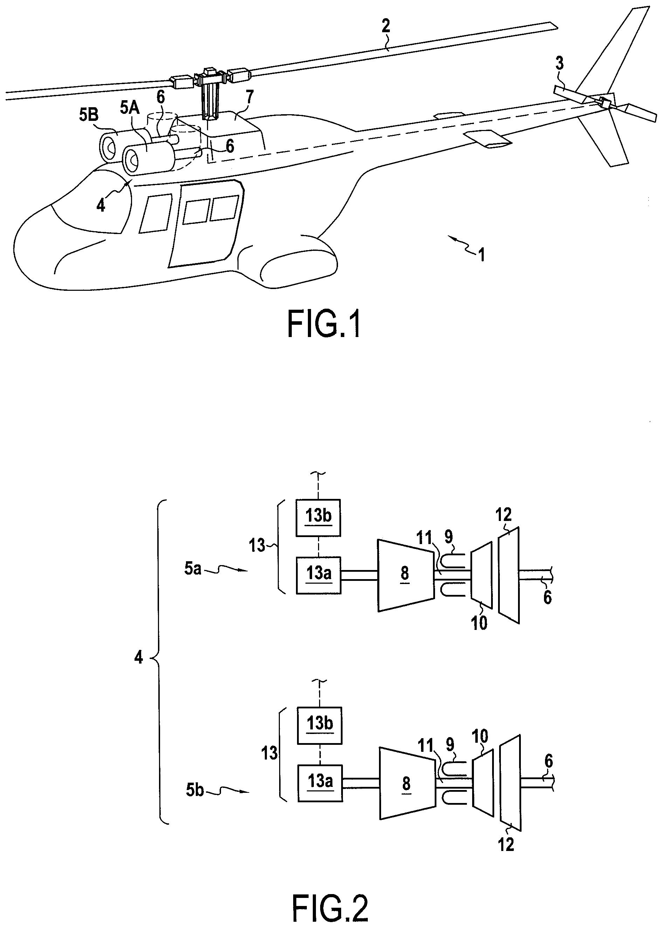

Le groupe moteur 4 est illustré en plus grand détail sur la figure 2. Chaque turbomachine 5a,5b comprend un compresseur 8, une chambre de combustion 9, une première turbine 10 reliée par un arbre rotatif 11 au compresseur 8 et une deuxième turbine 12, ou turbine libre, couplée à l'arbre de prise de puissance 6. L'ensemble du compresseur 8, chambre de combustion 9, première turbine 10 et arbre rotatif 11 est aussi connu sous le nom de « générateur de gaz ». L'arbre rotatif 11 de chaque générateur de gaz est mécaniquement couplé à un dispositif d'actionnement 13 comprenant une machine électrique 13a, plus spécifiquement un moteur-générateur, et un convertisseur de puissance 13b connecté électriquement à la machine électrique 13a et relié à un réseau électrique de l'aéronef 1.

Le dispositif d'actionnement 13 sert tant au démarrage de la turbomachine 5a, 5b correspondante qu'à la génération d'électricité après ce démarrage. Dans le premier cas, la machine électrique 13a fonctionne en mode moteur, et le convertisseur de puissance 13b assure son alimentation électrique à partir du réseau électrique de l'aéronef. Dans le deuxième cas, la machine électrique 13a fonctionne en mode générateur, et le convertisseur de puissance adapte le courant généré à un voltage et ampérage appropriés pour l'alimentation du réseau électrique de l'aéronef.

En outre, toutefois, le dispositif d'actionnement 13 peut également servir à maintenir la turbomachine 5a, 5b correspondante en mode vireur, en faisant tourner l'arbre rotatif 11, avec la chambre de combustion 9 éteinte, à une vitesse réduite Nᵥᵢᵣₑᵤᵣ, qui peut être, par exemple, entre 5 et 20% d'un régime nominal N₁ de l'arbre rotatif 11. Le maintien d'une turbomachine en mode vireur permet d'accélérer son éventuel démarrage.

La puissance fournie par le groupe moteur 4 peut varier sensiblement suivant l'étape de vol de l'aéronef 1. Ainsi, la puissance requise pour le régime de croisière est normalement sensiblement inférieure à la puissance maximale continue du groupe moteur 4, et encore moindre par rapport à sa puissance maximale de décollage. Or, le groupe moteur 4 étant dimensionné en fonction de cette dernière, il est sensiblement surdimensionné par rapport à la puissance requise pour le régime de croisière. En conséquence, en croisière, avec les deux turbomachines 5a, 5b en fonctionnement, elles pourraient se retrouver éloignées de leur régime optimal de fonctionnement, ce qui se traduirait par une consommation spécifique relativement élevée. En principe, avec un groupe moteur comprenant une pluralité de turbomachines, il est envisageable de maintenir le régime de croisière avec au moins une de ces turbomachines éteinte. Avec les autres turbomachines fonctionnant à un régime alors plus proche de leur régime optimal, la consommation spécifique peut être réduite. Afin de permettre un tel mode de fonctionnement d'un groupe moteur, tout en assurant le démarrage immédiat de la turbomachine éteinte, il a été proposé dans FR 2 967 132 de maintenir cette turbomachine éteinte en mode vireur.

Dans le groupe moteur 4 illustré sur la figure 2, la première turbomachine 5a est donc éteinte pendant le régime de croisière de l'aéronef 1, tandis que la deuxième turbomachine 5b fournit toute la puissance au rotor principal 2 et au rotor de queue 3 à travers la boîte de transmission principale 7. La machine électrique 13a de la deuxième turbomachine 5b assure simultanément l'alimentation du réseau électrique de l'aéronef 1 à travers son convertisseur de puissance 13b. Afin de pouvoir assurer le démarrage d'urgence de la première turbomachine 5a, notamment en cas de défaillance de la deuxième turbomachine 5b, la première turbomachine 5a est maintenue en mode vireur par actionnement de son arbre rotatif 11 par sa machine électrique 13a, alimentée à travers son convertisseur de puissance 13b.

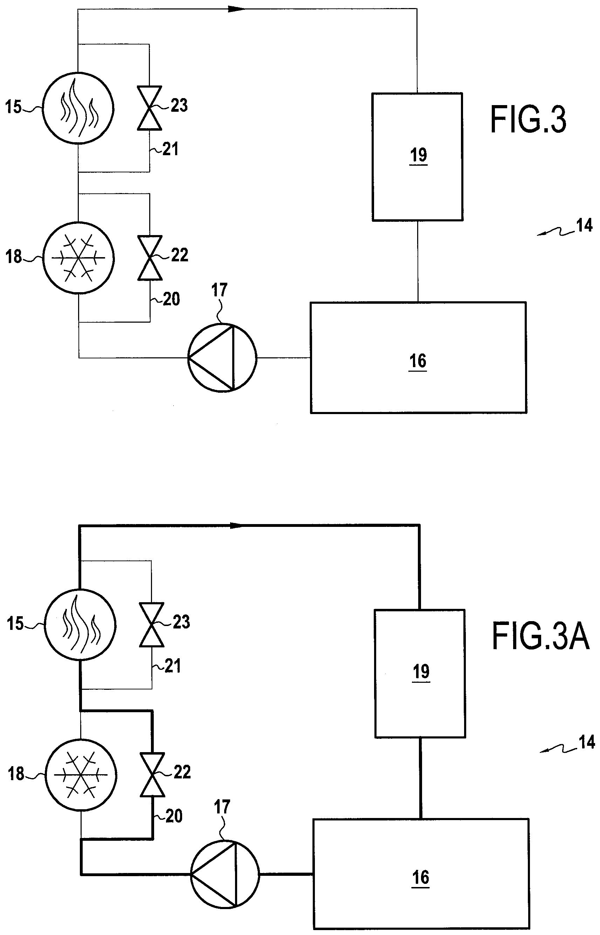

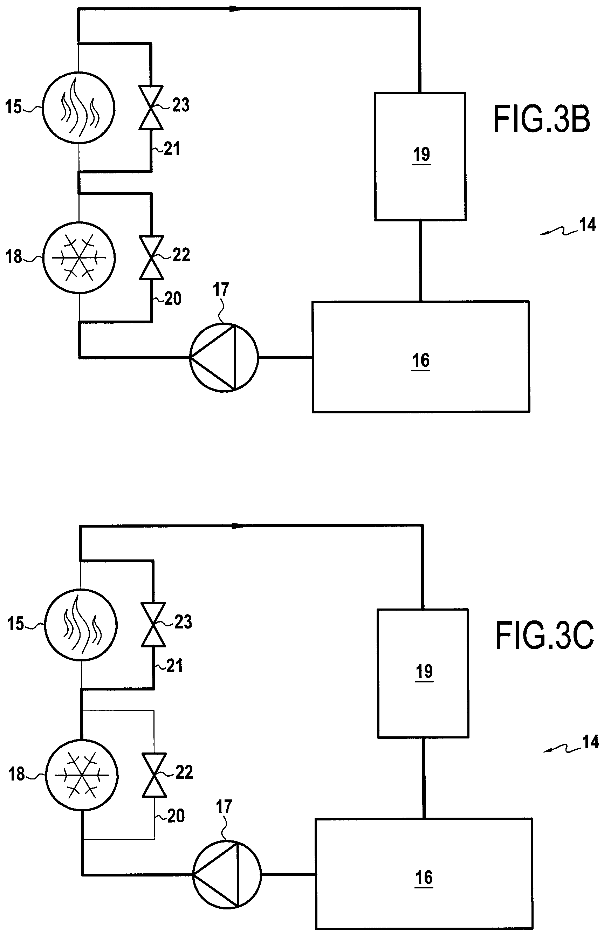

Toutefois, en vol, avec la chambre de combustion 9 éteinte et des températures ambiantes pouvant être très basses, surtout en altitude, la température T du lubrifiant de la première turbomachine 5a peut descendre très sensiblement. Afin d'éviter qu'elle atteigne un niveau excessivement bas, qui pourrait compromettre la lubrification des pièces mobiles de cette première turbomachine 5a, le circuit de lubrification 14 suivant un premier mode de réalisation illustré sur la figure 3 traverse une source chaude 15.

Plus spécifiquement, le circuit de lubrification 14 est un circuit fermé comportant un réservoir 16 et une pompe 17, et traversant une source froide 18 et la source chaude 15, ainsi que les éléments à lubrifier 19 dans la première turbomachine 5a. Le circuit 14 comporte aussi des conduits de contournement 20,21 de, respectivement, la source froide 18 et la source chaude 15, comportant chacun un clapet thermostatique 22,23 pour leur obturation à des plages de température prédéterminées. Toutefois, des vannes connectées à une unité de commande reliée à des capteurs de température du lubrifiant peuvent être utilisées à la place des clapets thermostatiques dans le même but.

La source froide 18 est typiquement un échangeur de chaleur lubrifiant/air permettant d'évacuer la chaleur du lubrifiant vers l'air ambiant. Toutefois, d'autres types de sources froides, notamment des échangeurs de chaleur lubrifiant/combustible, peuvent aussi être utilisés.

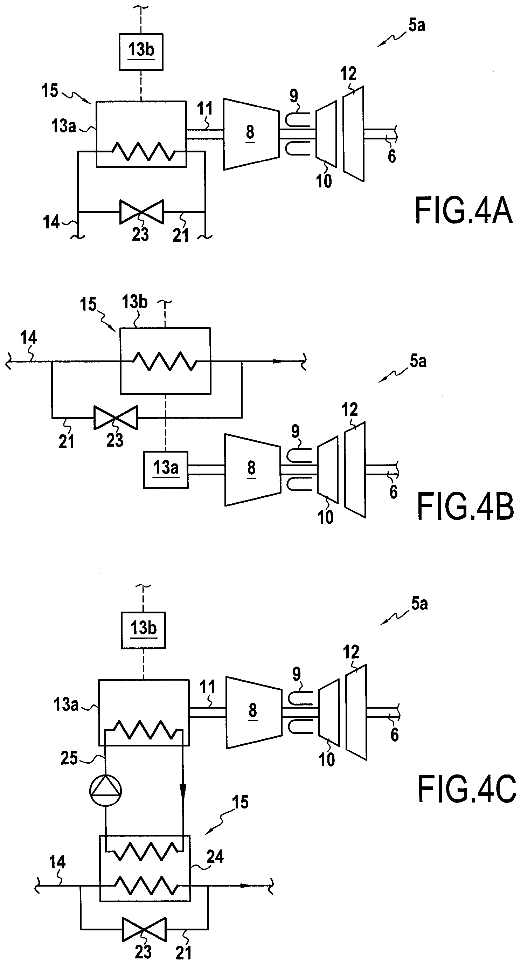

La source chaude 15 peut comprendre, par exemple, la machine électrique 13a de la première turbomachine 5a ou son convertisseur de puissance 13b. Dans la variante illustrée sur la figure 4A, la source chaude 15 est la machine électrique 13a, qui est directement traversée par le circuit de lubrification 14. Dans son fonctionnement comme moteur actionnant l'arbre rotatif 11 en mode vireur, cette machine électrique 13a génère de la chaleur, qui est évacuée dans cette variante par le lubrifiant circulant à travers le circuit de lubrification 14. Ainsi, le réchauffement du lubrifiant peut simultanément contribuer au refroidissement de la machine électrique. Dans la variante illustrée sur la figure 4B, la source chaude 15 est le convertisseur de puissance 13b. Pendant le fonctionnement de la machine électrique 13a comme moteur actionnant l'arbre rotatif 11 en mode vireur, l'alimentation de cette machine électrique à travers ce convertisseur de puissance 13b génère aussi de la chaleur, qui est évacuée dans cette variante par le lubrifiant circulant à travers le circuit de lubrification 14. Ainsi, le réchauffement du lubrifiant peut simultanément contribuer au refroidissement du convertisseur de puissance 13b.

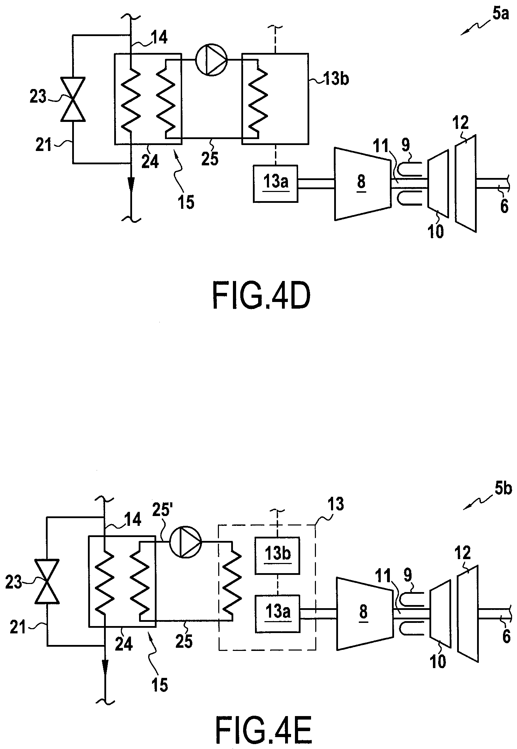

Le transfert de chaleur entre le dispositif d'actionnement 13 de l'arbre rotatif 11 et le circuit de lubrification 14 peut aussi ne pas s'effectuer de manière directe, comme dans ces deux premières variantes, mais de manière indirecte, à travers un circuit de refroidissement traversant un échangeur de chaleur traversé aussi séparément par le circuit de lubrification 14. Ainsi, dans une troisième variante, illustrée sur la figure 4C, la source chaude 15 du circuit de lubrification 14 comprend un échangeur de chaleur 24 connecté de cette manière à un circuit de refroidissement 25 de la machine électrique 13a de la première turbomachine 5a. Dans une quatrième variante, illustrée sur la figure 4D, la source chaude comprend un échangeur de chaleur 24 connecté de la même manière à un circuit de refroidissement 25 du convertisseur de puissance 13b de la première turbomachine 5a.

En particulier quand la source chaude 15 du circuit de lubrification 14 comprend un tel échangeur de chaleur, il est également envisageable de l'utiliser pour un transfert de chaleur à partir d'autres organes que le dispositif d'actionnement 13 de la première turbomachine 5a. Ce transfert de chaleur peut par exemple s'effectuer à partir de la deuxième turbomachine 5b, qui reste allumée en vol tandis que la première turbomachine 5a est en mode vireur. Ainsi, dans une cinquième variante, illustrée sur la figure 4E, l'échangeur de chaleur 24 formant la source chaude 15 du circuit de lubrification 14 est connecté à un circuit de refroidissement 25' du dispositif d'actionnement 13 de la deuxième turbomachine 5b. Si cette deuxième turbomachine 5b fonctionne en mode normal pendant que la première turbomachine 5a est maintenue en mode vireur, la machine électrique 12a peut fonctionner comme générateur électrique alimentant le réseau électrique de l'aéronef 1 à travers le convertisseur de puissance 13b. Dans cette situation, tant cette machine électrique 13a que le convertisseur de puissance 13b génèrent simultanément de la chaleur pouvant être évacuée vers le circuit de lubrification 14 de la première turbomachine 5a à travers le circuit de refroidissement 25'.

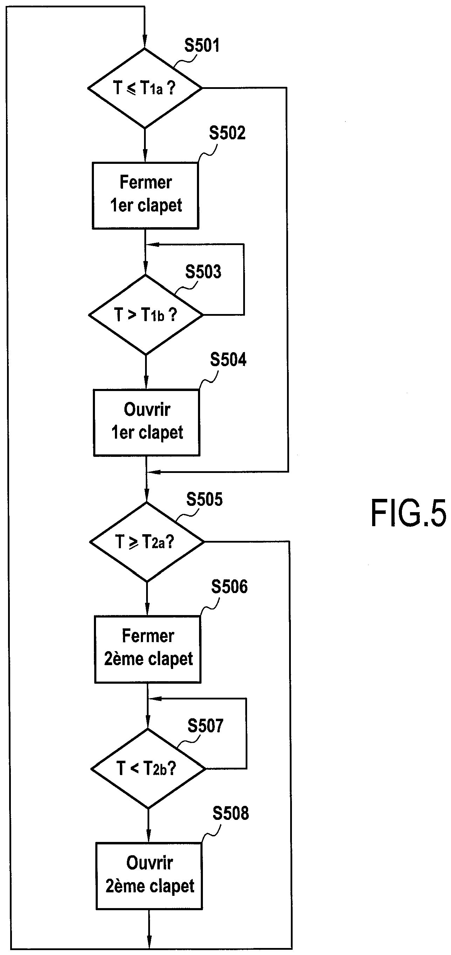

Dans chacune de ces variantes, la source chaude 15 et la source froide 18 peuvent être contournées afin de réguler la température du lubrifiant de la première turbomachine 5a. L'ordinogramme de la figure 5 illustre le fonctionnement de cette régulation de température à partir d'un stade initial dans lequel les deux clapets thermostatiques 22,23 du circuit de lubrification 14 illustré sur la figure 3 sont ouverts, stade illustré sur la figure 3B et dans lequel la plus grande partie du débit de lubrifiant pompé par la pompe 17 à travers le circuit 14 contourne les sources froide et chaude 18, 15 à travers, respectivement, les conduits de contournement 20 et 21. Dans l'étape S501, la température T du lubrifiant est comparée à un premier seuil de fermeture T₁ₐ. Si la température T du lubrifiant est égale ou inférieure au seuil de fermeture T₁ₐ, le clapet thermostatique 23 dans le conduit de contournement 21 de la source chaude 15 se referme dans l'étape S502, obturant ainsi ce conduit de contournement 21 et forçant le lubrifiant à traverser la source chaude 15, comme illustré sur la figure 3A. Le lubrifiant est ainsi réchauffé pour assurer sa circulation, et ceci même si la première turbomachine 5a est en mode vireur. Le seuil de fermeture T₁ₐ peut être, par exemple, entre 333 et 343 K.

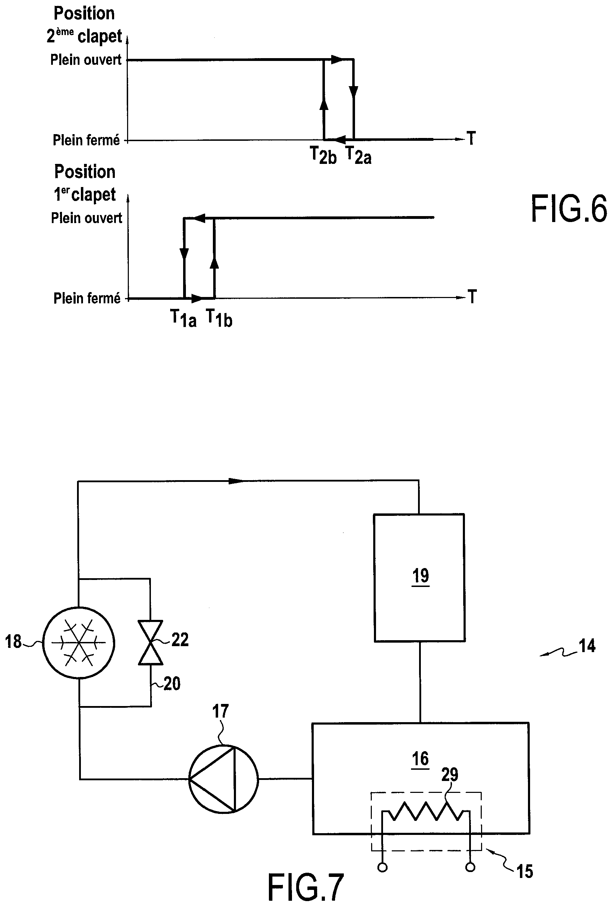

Si le clapet thermostatique 23 est donc fermé, dans l'étape suivante S503 la température T du lubrifiant est comparée à un premier seuil d'ouverture T_{1b}. Tant que la température T ne sera pas supérieure à ce seuil d'ouverture T_{1b}, cette étape va être régulièrement répétée en boucle. Si la température T du lubrifiant est supérieure à ce seuil d'ouverture T_{1b}, le clapet thermostatique 23 dans le conduit de contournement 21 de la source chaude 15 va se rouvrir dans l'étape S504, pour revenir vers la configuration illustrée sur la figure 3A. Le seuil d'ouverture T_{1b} peut être identique au seuil de fermeture T₁ₐ. Toutefois, afin de créer une hystérésis permettant d'éviter une instabilité du clapet thermostatique 23, le seuil d'ouverture T_{1b} peut être sensiblement supérieur au seuil de fermeture T₁ₐ, par exemple 5 à 10 K plus élevé. Cette hystérésis est illustrée sur la figure 6. Elle est propre à certains types de clapets thermostatiques comme les clapets thermostatiques à noyau de cire, mais d'autres types de clapets, comme les électroclapets, peuvent aussi être adaptés pour fonctionner avec une telle hystérésis pour éviter leur instabilité.

Après la réouverture du clapet thermostatique 23 dans l'étape S504, ou si la température T était déjà supérieure au premier seuil de fermeture T₁ₐ dans l'étape S501, dans l'étape S505 la température T du lubrifiant est comparée à un deuxième seuil de fermeture T₂ₐ. Si la température T du lubrifiant est égale ou supérieure à ce deuxième seuil de fermeture T₂ₐ, le clapet thermostatique 22 dans le conduit de contournement 20 de la source froide 18 se referme dans l'étape S506, obturant ainsi ce conduit de contournement 20 et forçant le lubrifiant à traverser la source froide 18, comme illustré sur la figure 3C. Le lubrifiant est ainsi refroidi pour évacuer la chaleur générée dans la première turbomachine 5a. Le deuxième seuil de fermeture T₂ₐ est sensiblement supérieur au premier seuil de fermeture T₁ₐ ainsi qu'au premier seuil d'ouverture T_{1b} et peut être, par exemple, entre 353 et 363 K.

Si le clapet thermostatique 22 est donc fermé, dans l'étape suivante S507 la température T du lubrifiant est comparée à un deuxième seuil d'ouverture T_{2b}. Tant que la température T ne sera pas inférieure à ce seuil d'ouverture T_{1b}, cette étape va être régulièrement répétée en boucle. Si la température T du lubrifiant est inférieure à ce seuil d'ouverture T_{2b}, le clapet thermostatique 22 dans le conduit de contournement 20 de la source froide 18 va se rouvrir dans l'étape S508, pour revenir vers la configuration illustrée sur la figure 3B. Le seuil d'ouverture T_{2b} peut être identique au seuil de fermeture T₂ₐ. Toutefois, afin de créer une hystérésis permettant d'éviter une instabilité du clapet thermostatique 22, le seuil d'ouverture T_{2b} peut être sensiblement inférieur au seuil de fermeture T₂ₐ, par exemple 5 à 10 K moins élevé, tout en restant sensiblement supérieur au premier seuil de fermeture T₁ₐ ainsi qu'au premier seuil d'ouverture T_{1b}. Cette hystérésis est également illustrée sur la figure 6.

D'autres alternatives sont toutefois envisageables pour la régulation de la température du lubrifiant d'une turbomachine, et en particulier pour son réchauffement en mode vireur. Ainsi, dans le mode de réalisation illustré sur la figure 7, qui est aussi applicable au groupe moteur 4 des figures 1 et 2, la source chaude 15 du circuit de lubrification 14 comprend une résistance électrique 29 dans le réservoir 16. Le reste des éléments dans ce deuxième mode de réalisation est analogue à ceux recevant les mêmes chiffres de référence sur la figure 3.

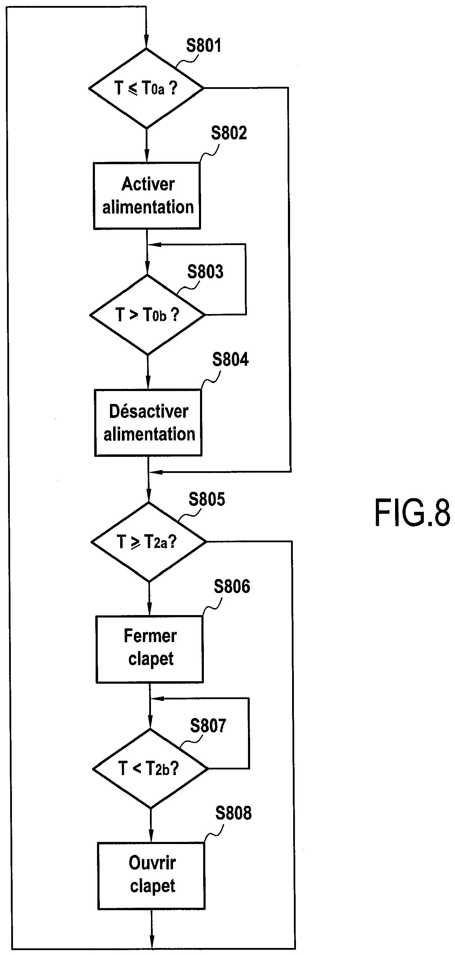

La résistance électrique 29 est connectée au réseau électrique de l'aéronef 1 pour son alimentation électrique, laquelle peut être activée et désactivée à souhait. Un conduit de contournement de cette source chaude 15 n'est donc pas nécessaire pour réguler la température T du lubrifiant dans ce circuit de lubrification 14. L'ordinogramme de la figure 8 illustre le procédé de régulation de ce deuxième mode de réalisation à partir d'un stade initial dans lequel l'alimentation de la résistance électrique 26 est désactivée et le clapet thermostatique 22 est ouvert. Dans l'étape S801, la température T du lubrifiant est comparée à un seuil d'activation T₀ₐ. Si la température T du lubrifiant est égale ou inférieure au seuil d'activation T₀ₐ, l'alimentation de la résistance électrique 29 est activée dans l'étape S802, générant une chaleur transmise au lubrifiant traversant le circuit de lubrification 14. Le lubrifiant est ainsi réchauffé pour assurer sa circulation, et ceci même si la première turbomachine 5a est en mode vireur. Dans ce mode de réalisation, le seuil d'activation T₀ₐ peut être, par exemple, entre 283 et 293 K.

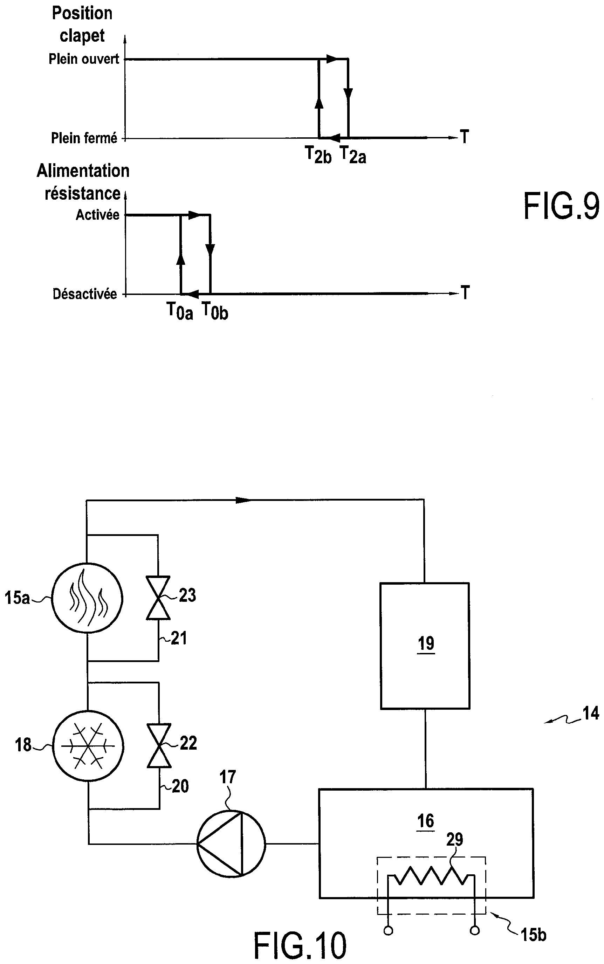

Si l'alimentation de la résistance électrique 29 est donc activée, dans l'étape suivante S803 la température T du lubrifiant est comparée à un seuil de désactivation T_{0b}. Tant que la température T ne sera pas supérieure à ce seuil de désactivation T_{0b}, cette étape va être régulièrement répétée en boucle. Si la température T du lubrifiant est supérieure à ce seuil de désactivation T_{0b}, l'alimentation de la résistance électrique 26 va être désactivée dans l'étape S804. Le seuil de désactivation T_{0b} peut être identique au seuil d'activation T₀ₐ. Toutefois, afin de créer une hystérésis, le seuil de désactivation T_{0b} peut être sensiblement supérieur au seuil d'activation T₀ₐ, par exemple 5 à 10 K plus élevé. Cette hystérésis est illustrée sur la figure 9.

Après la désactivation de l'alimentation de la résistance électrique 29 dans l'étape S804, ou si la température T était déjà supérieure au seuil d'activation T₀ₐ dans l'étape S801, dans l'étape S805 la température T du lubrifiant est comparée à un seuil de fermeture T₂ₐ. Si la température T du lubrifiant est égale ou supérieure à ce seuil de fermeture T₂ₐ, le clapet thermostatique 22 dans le conduit de contournement 20 de la source froide 18 se referme dans l'étape S806, obturant ainsi ce conduit de contournement 20 et forçant le lubrifiant à traverser la source froide 18. Le lubrifiant est ainsi refroidi pour évacuer la chaleur générée dans la première turbomachine 5a. Ce seuil de fermeture T₂ₐ est sensiblement supérieur au seuil d'activation T₀ₐ ainsi qu'au seuil de désactivation T_{0b} et peut être, par exemple, entre 353 et 363 K.

Si le clapet thermostatique 22 est donc fermé, dans l'étape suivante S807 la température T du lubrifiant est comparée à un seuil d'ouverture T_{2b}. Tant que la température T ne sera pas inférieure à ce seuil d'ouverture T_{1b}, cette étape va être régulièrement répétée en boucle. Si la température T du lubrifiant est inférieure à ce seuil d'ouverture T_{2b}, le clapet thermostatique 22 dans le conduit de contournement 20 de la source froide 18 va se rouvrir dans l'étape S808. Le seuil d'ouverture T_{2b} peut être identique au seuil de fermeture T₂ₐ. Toutefois, afin de créer une hystérésis permettant d'éviter une instabilité du clapet thermostatique 22, le seuil d'ouverture T_{2b} peut être sensiblement inférieur au seuil de fermeture T₂ₐ, par exemple 5 à 10 K moins élevé, tout en restant sensiblement supérieur au seuil d'activation T₀ₐ ainsi qu'au seuil de désactivation T_{0b}. Cette hystérésis est aussi illustrée sur la figure 9.

Il est également possible de combiner les caractéristiques du premier et du deuxième mode de réalisation dans un troisième mode de réalisation tel que celui illustré sur la figure 10. Dans ce troisième mode de réalisation, le circuit de lubrification 14 comprend deux sources chaudes 15a,15b : une première source chaude 15a conformément à l'une quelconque des variantes illustrées sur les figures 4A à 4E, avec un conduit de contournement 21 équipé d'un clapet thermostatique 23, comme dans le premier mode de réalisation, mais aussi une deuxième source chaude 15b comprenant une résistance électrique 29 dans le réservoir 16, comme dans le deuxième mode de réalisation. Le reste des éléments dans ce troisième mode de réalisation est analogue à ceux recevant les mêmes chiffres de référence sur les figures 3 et 6.

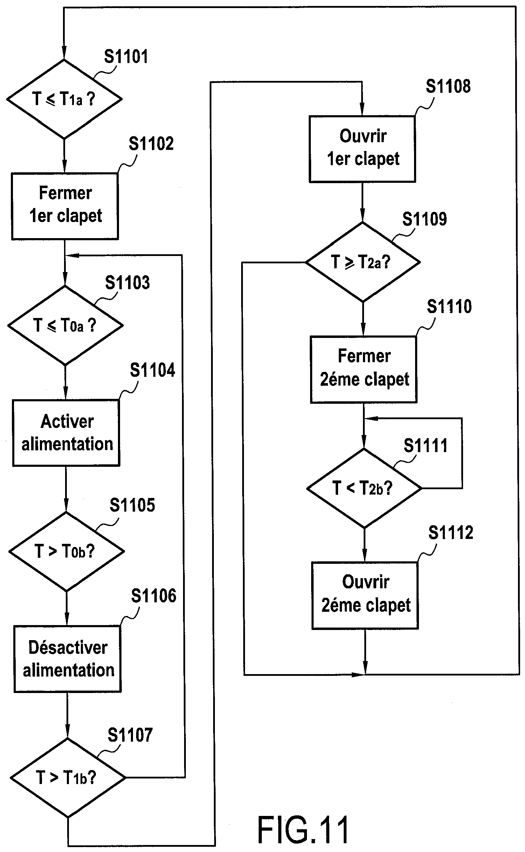

L'ordinogramme de la figure 11 illustre le procédé de régulation de ce troisième mode de réalisation à partir d'un stade initial dans lequel l'alimentation de la résistance électrique 29 est désactivée et les clapets thermostatiques 22 et 23 sont ouverts. Dans l'étape S1101, la température T du lubrifiant est comparée à un premier seuil de fermeture T₁ₐ. Si la température T du lubrifiant est égale ou inférieure au seuil de fermeture T₁ₐ, le clapet thermostatique 23 dans le conduit de contournement 21 de la première source chaude 15a se referme dans l'étape S1102, obturant ainsi ce conduit de contournement 21 et forçant le lubrifiant à traverser la première source chaude 15a, comme illustré sur la figure 3A. Le lubrifiant est ainsi réchauffé pour assurer sa circulation, et ceci même si la première turbomachine 5a est en mode vireur. Le premier seuil de fermeture T₁ₐ peut être, par exemple, entre 333 et 343 K.

Il se peut, toutefois, que la température T du lubrifiant soit trop basse pour que le lubrifiant soit réchauffé de manière suffisamment rapide par la seule première source chaude 15a. En conséquence, dans l'étape suivante S1103, la température T du lubrifiant est comparée à un seuil d'activation T₀ₐ, sensiblement inférieur au premier seuil de fermeture 15a. Si la température T du lubrifiant est égale ou inférieure au seuil d'activation T₀ₐ, l'alimentation de la résistance électrique 29 est activée dans l'étape S1104, générant une chaleur transmise au lubrifiant traversant le circuit de lubrification 14. On obtient ainsi un réchauffement supplémentaire du lubrifiant. Le seuil d'activation T₀ₐ dans ce mode de réalisation peut être, par exemple, entre 283 et 293 K.

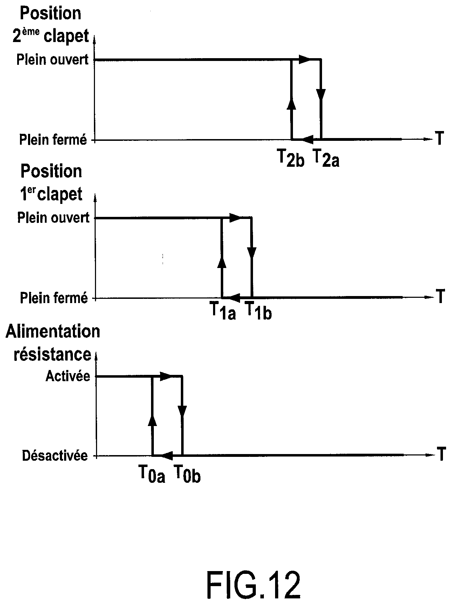

Si l'alimentation de la résistance électrique 26 est donc activée, dans l'étape suivante S1105 la température T du lubrifiant est comparée à un seuil de désactivation T_{0b}. Tant que la température T ne sera pas supérieure à ce seuil de désactivation T_{0b}, cette étape va être régulièrement répétée en boucle. Si la température T du lubrifiant est supérieure à ce seuil de désactivation T_{0b}, l'alimentation de la résistance électrique 29 va être désactivée dans l'étape S1106. Le seuil de désactivation T_{0b} peut être identique au seuil d'activation T₀ₐ. Toutefois, afin de créer une hystérésis, le seuil de désactivation T_{0b} peut être sensiblement supérieur au seuil d'activation T₀ₐ, par exemple 5 à 10 K plus élevé, tout en restant sensiblement inférieur au premier seuil de fermeture T₁ₐ. Cette hystérésis est illustrée sur la figure 12.

Après la désactivation de l'alimentation de la résistance électrique 26 dans l'étape S1106, ou si la température T était déjà supérieure au seuil d'activation T₀ₐ dans l'étape S1103, dans l'étape S1107 la température T du lubrifiant est comparée à un premier seuil d'ouverture T_{1b}. Tant que la température T ne sera pas supérieure à ce seuil d'ouverture T_{1b}, le procédé va être renvoyé vers l'étape S1103, et au moins les étapes S1103 et S1107 vont être répétées en boucle. Si la température T du lubrifiant est supérieure à ce premier seuil d'ouverture T_{1b}, le clapet thermostatique 23 dans le conduit de contournement 21 de la source chaude 15 va se rouvrir dans l'étape S1108. Le premier seuil d'ouverture T_{1b} peut être identique au premier seuil de fermeture T₁ₐ. Toutefois, afin de créer une hystérésis permettant d'éviter une instabilité du clapet thermostatique 23, le premier seuil d'ouverture T_{1b} peut être sensiblement supérieur au premier seuil de fermeture T₁ₐ, par exemple 5 à 10 K plus élevé. Cette hystérésis est aussi illustrée sur la figure 12.

Après la réouverture du clapet thermostatique 23 dans l'étape S1108, ou si la température T était déjà supérieure au premier seuil de fermeture T₁ₐ dans l'étape S1101, dans l'étape S1109 la température T du lubrifiant est comparée à un deuxième seuil de fermeture T₂ₐ. Si la température T du lubrifiant est égale ou supérieure à ce deuxième seuil de fermeture T₂ₐ, le clapet thermostatique 22 dans le conduit de contournement 20 de la source froide 18 se referme dans l'étape S1110, obturant ainsi ce conduit de contournement 20 et forçant le lubrifiant à traverser la source froide 18. Le lubrifiant est ainsi refroidi pour évacuer la chaleur générée dans la première turbomachine 5a. Le deuxième seuil de fermeture T₂ₐ est sensiblement supérieur au premier seuil de fermeture T₁ₐ ainsi qu'au premier seuil d'ouverture T_{1b} et peut être, par exemple, entre 353 et 363 K.

Si le clapet thermostatique 22 est donc fermé, dans l'étape suivante S1111 la température T du lubrifiant est comparée à un deuxième seuil d'ouverture T_{2b}. Tant que la température T ne sera pas inférieure à ce seuil d'ouverture T_{1b}, cette étape va être régulièrement répétée en boucle. Si la température T du lubrifiant est inférieure à ce seuil d'ouverture T_{2b}, le clapet thermostatique 22 dans le conduit de contournement 20 de la source froide 18 va se rouvrir dans l'étape S1112. Le seuil d'ouverture T_{2b} peut être identique au seuil de fermeture T₂ₐ. Toutefois, afin de créer une hystérésis permettant d'éviter une instabilité du clapet thermostatique 22, le seuil d'ouverture T_{2b} peut être sensiblement inférieur au seuil de fermeture T₂ₐ, par exemple 5 à 10 K moins élevé, tout en restant sensiblement supérieur au premier seuil de fermeture T₁ₐ ainsi qu'au premier seuil d'ouverture T_{1b}. Cette hystérésis est aussi illustrée sur la figure 12.

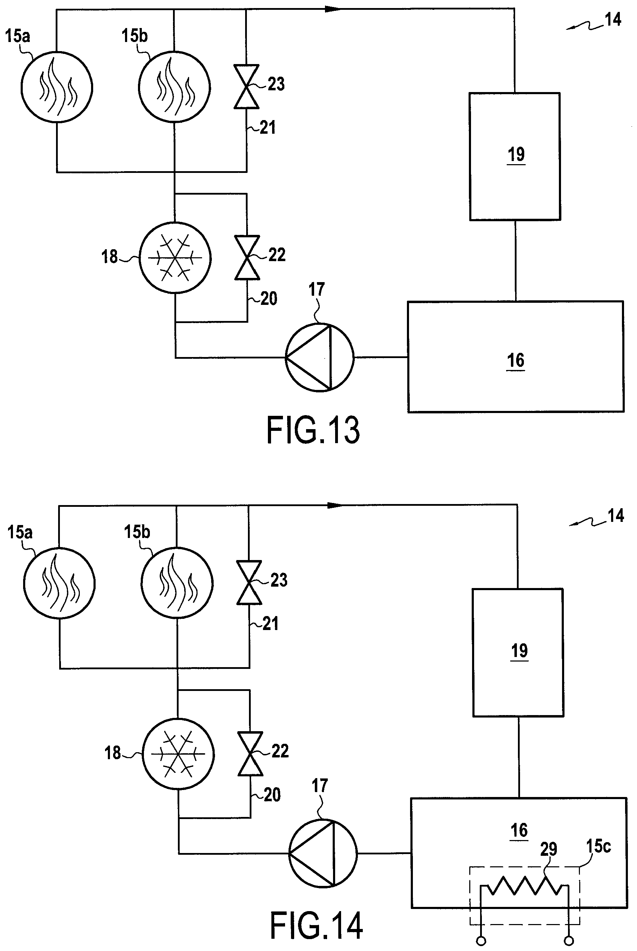

En général, il est toujours envisageable de combiner plusieurs sources chaudes, contournables ou désactivables, dans le circuit de lubrification. Ainsi, dans un quatrième mode de réalisation, illustré sur la figure 13, deux sources chaudes 15a,15b sont placées en parallèle dans le circuit de lubrification 14. Chacune de ces deux sources chaudes 15a,15b peut correspondre à l'une quelconque des variantes illustrées sur les figures 4A à 4H. Les autres éléments sont analogues à ceux du premier mode de réalisation, et reçoivent les mêmes chiffres de référence. Ainsi, un conduit obturable de contournement 21 commun permet de contourner les deux sources chaudes 15a,15b simultanément, et la température du lubrifiant peut être régulée suivant le procédé de la figure 5. Dans un cinquième mode de réalisation, illustré sur la figure 14, les deux sources chaudes 15a, 15b sont combinées avec une troisième source chaude 15c comprenant une résistance électrique 29 dans le réservoir 16, comme dans les deuxième et troisième modes de réalisation. Les autres éléments sont analogues à ceux du quatrième mode de réalisation, et reçoivent les mêmes chiffres de référence. La température du lubrifiant peut ici être régulée suivant le procédé de la figure 9.

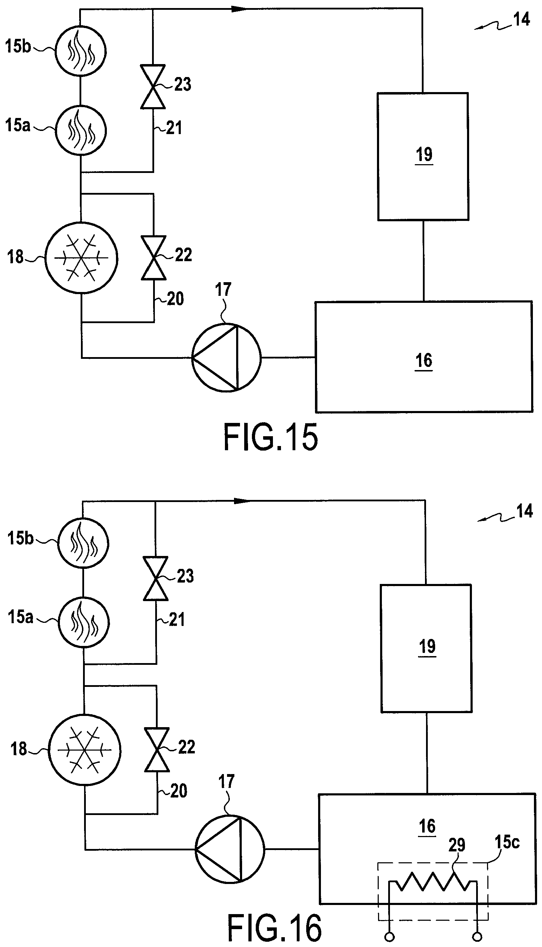

La figure 15 illustre un sixième mode de réalisation, analogue au quatrième mode de réalisation, mais avec les deux sources chaudes 15a,15b en série plutôt qu'en parallèle. Les éléments analogues à ceux du quatrième mode de réalisation reçoivent les mêmes chiffres de référence. La figure 16 illustre un septième mode de réalisation, analogue au cinquième mode de réalisation, mais avec les deux sources chaudes 15a,15b en série plutôt qu'en parallèle. Les éléments analogues à ceux du quatrième mode de réalisation reçoivent les mêmes chiffres de référence. Dans ces deux derniers modes, comme dans les quatrième et cinquième modes de réalisation, les deux sources chaudes 15a, 15b ont un conduit obturable de contournement 21 commun, permettant ainsi une régulation de la température du lubrifiant suivant le procédé de la figure 5 pour le sixième mode de réalisation, et le procédé de la figure 9 pour le septième mode de réalisation. Il est toutefois également envisageable d'équiper ces circuits de lubrification avec un conduit obturable de contournement individuel pour chacune des première et deuxième sources chaudes, avec des seuils d'ouverture et fermeture égaux ou différents pour les dispositifs d'obturation de chacun de ces conduits de contournement individuels.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par exemple, l'éventuelle alimentation électrique d'éléments de chaque circuit de lubrification pourrait s'effectuer à partir d'autres sources qu'un réseau électrique d'aéronef, comme par exemple une batterie et/ou un générateur dédiés. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Turbomachine (5a) comprenant au moins :
un compresseur (8) ;
une chambre de combustion (9), située en aval du compresseur (8), pour la combustion d'un mélange d'air provenant du compresseur (8) et de carburant ;
un premier arbre rotatif (11) ;
une première turbine (10) pour la détente de gaz de combustion provenant de la chambre de combustion (9) et l'entraînement du compresseur (8) à travers le premier arbre rotatif (11) ;
un dispositif (13) d'actionnement dudit premier arbre rotatif (11) configuré pour maintenir en rotation, dans un mode de fonctionnement, la première turbine (10) et le compresseur (8) avec la chambre de combustion (9) éteinte ; et
un circuit (14) de lubrification de la turbomachine (5a), disposé de manière à lubrifier au moins un palier dudit premier arbre rotatif (11), et traversant au moins une source chaude (15,15a-15c) comprenant au moins un consommateur électrique ;
la turbomachine étant **caractérisée en ce qu'**elle est configurée pour que de l'énergie électrique convertie
au moins partiellement en chaleur par ledit au moins un consommateur électrique réchauffe un lubrifiant dans ledit circuit (14) de lubrification quand la température du lubrifiant descend en dessous d'un premier seuil prédéterminé pendant la rotation de la première turbine (10) et du compresseur (8) avec la chambre de combustion (9) éteinte.

2. Turbomachine (5a) suivant la revendication 1, dans laquelle ladite source chaude (15,15a, 15b) comprend ledit dispositif d'actionnement (13).

3. Turbomachine (5a) suivant l'une quelconque des revendications 1 ou 2, dans laquelle ladite source chaude (15,15a, 15b) comprend un échangeur de chaleur (24) pour transmettre la chaleur au lubrifiant dans le circuit (14) de lubrification.

4. Turbomachine (5a) suivant l'une quelconque des revendications précédentes, dans laquelle ladite source chaude (15,15b, 15c) comprend une résistance électrique (29).

5. Turbomachine (5a) suivant l'une quelconque des revendications précédentes, dans laquelle ledit circuit de lubrification (14) comprend un conduit (21) obturable de contournement de la source chaude (15,15a, 15b).

6. Turbomachine (5a) suivant l'une quelconque des revendications précédentes, dans laquelle ledit circuit de lubrification (14) traverse au moins deux sources chaudes (15a-15c) aptes à réchauffer le lubrifiant dans ledit circuit (14) pendant la rotation de la première turbine (10) et du compresseur (8) avec la chambre de combustion (9) éteinte.

7. Turbomachine (5a) suivant la revendication 6, dans laquelle lesdites deux sources chaudes (15a, 15b) sont arrangées en parallèle dans ledit circuit de lubrification (14).

8. Turbomachine (5a) suivant la revendication 6, dans laquelle lesdites deux sources chaudes (15a, 15b) sont arrangées en série dans ledit circuit de lubrification (14).

9. Turbomachine (5a) suivant l'une quelconque des revendications précédentes, dans laquelle ledit circuit de lubrification (15a, 15b) traverse aussi au moins une source froide (18) pour le refroidissement dudit lubrifiant avec la chambre de combustion (9) allumée.

10. Turbomachine (5a) suivant l'une quelconque des revendications précédentes, dans laquelle ledit dispositif d'actionnement (13) comprend une machine électrique (13a) couplée mécaniquement audit premier arbre rotatif (11).

11. Turbomachine (5a) suivant la revendication 10, dans laquelle ledit dispositif d'actionnement (13) comprend en outre un convertisseur de puissance (13b) pour l'alimentation électrique de ladite machine électrique (13a).

12. Turbomachine (5a) suivant l'une quelconque des revendications précédentes, comprenant en outre une deuxième turbine (12), disposée en aval de la première turbine (10) et couplée mécaniquement à un arbre de prise de puissance (6).

13. Groupe moteur (4) comprenant au moins une première turbomachine (5a) suivant l'une quelconque des revendications précédentes, et une deuxième turbomachine (5b).

14. Procédé de régulation thermique d'un lubrifiant dans un circuit de lubrification (14) d'une turbomachine (5a) comprenant au moins un compresseur (8), une chambre de combustion (9) située en aval du compresseur (8) pour la combustion d'un mélange d'air provenant du compresseur (8) et de carburant, une première turbine (10) pour la détente de gaz de combustion provenant de la chambre de combustion (9) et l'entraînement du compresseur (8) à travers un premier arbre rotatif (11), et un dispositif (13) d'actionnement dudit premier arbre rotatif (11), dans lequel ledit lubrifiant, servant à lubrifier au moins un palier dudit premier arbre rotatif (11), est dirigé à travers une source chaude (15,15a-15c) traversée par ledit circuit de lubrification (14) et comprenant au moins un consommateur électrique convertissant de l'énergie électrique au moins partiellement en chaleur pour réchauffer le lubrifiant quand la température du lubrifiant descend en dessous d'un premier seuil prédéterminé pendant que la première turbine (10) et le compresseur (8) sont maintenus en rotation par ledit dispositif d'actionnement (13) avec la chambre de combustion (9) éteinte.

15. Procédé de régulation thermique suivant la revendication 14, dans lequel ledit lubrifiant est dirigé à travers une source froide (18) traversée par ledit circuit de lubrification (14) pour le refroidir quand la température du lubrifiant excède un deuxième seuil prédéterminé avec la chambre de combustion (9) allumée.

## Patentansprüche

1. Turbomaschine (5a), die wenigstens umfasst:
einen Verdichter (8),
eine stromab des Verdichters (8) gelegene Brennkammer (9) für die Verbrennung eines Gemischs aus aus dem Verdichter (8) stammender Luft und aus Treibstoff,
eine erste Drehwelle (11),
eine erste Turbine (10) für die Entspannung von aus der Brennkammer (9) stammenden Verbrennungsgasen und den Antrieb des Verdichters (8) durch die erste Drehwelle (11),
eine Vorrichtung (13) zur Betätigung der ersten Drehwelle (11), welche dazu ausgelegt ist, in einer Betriebsart die erste Turbine (10) und den Verdichter (8), während die Brennkammer (9) aus ist, in Rotation zu halten, und
einen Kreis (14) zum Schmieren der Turbomaschine (5a), welcher derart angeordnet ist, dass wenigstens ein Lager der ersten Drehwelle (11) geschmiert wird, und welcher wenigstens eine heiße Quelle (15, 15a-15c), die wenigstens einen elektrischen Verbraucher umfasst, durchquert,
wobei die Turbomaschine **dadurch gekennzeichnet ist, dass** sie ausgelegt ist, um, durch den wenigstens einen elektrischen Verbraucher wenigstens teilweise in Wärme umgewandelte elektrische Energie ein Schmiermittel in dem Schmierkreis (14) zu erwärmen, wenn die Temperatur des Schmiermittels während der Rotation der ersten Turbine (10) und des Verdichters (8), während die Brennkammer (9) aus ist, unter eine vorbestimmte erste Schwelle sinkt.

2. Turbomaschine (5a) nach Anspruch 1, bei der die heiße Quelle (15, 15a, 15b) die Betätigungsvorrichtung (13) umfasst.

3. Turbomaschine (5a) nach einem der Ansprüche 1 oder 2, bei der die heiße Quelle (15, 15a, 15b) einen Wärmetauscher (24) umfasst, um die Wärme auf das Schmiermittel in dem Schmierkreis (14) zu übertragen.

4. Turbomaschine (5a) nach einem der vorhergehenden Ansprüche, bei der die heiße Quelle (15, 15b, 15c) einen elektrischen Widerstand (29) umfasst.

5. Turbomaschine (5a) nach einem der vorhergehenden Ansprüche, bei der der Schmierkreis (14) eine verschließbare Leitung (21) zur Umgehung der heißen Quelle (15, 15a, 15b) umfasst.

6. Turbomaschine (5a) nach einem der vorhergehenden Ansprüche, bei der der Schmierkreis (14) wenigstens zwei heiße Quellen (15a-15c) durchquert, welche geeignet sind, das Schmiermittel in dem Kreis (14) während der Rotation der ersten Turbine (10) und des Verdichters (8), während die Brennkammer (9) aus ist, zu erwärmen.

7. Turbomaschine (5a) nach Anspruch 6, bei der die beiden heißen Quellen (15a, 15b) in dem Schmierkreis (14) parallel angeordnet sind.

8. Turbomaschine (5a) nach Anspruch 6, bei der die beiden heißen Quellen (15a, 15b) in dem Schmierkreis (14) in Reihe angeordnet sind.

9. Turbomaschine (5a) nach einem der vorhergehenden Ansprüche, bei der der Schmierkreis (15a, 15b) auch wenigstens eine kalte Quelle (18) für die Kühlung des Schmiermittels, während die Brennkammer (9) an ist, durchquert.

10. Turbomaschine (5a) nach einem der vorhergehenden Ansprüche, bei der die Betätigungsvorrichtung (13) eine elektrische Maschine (13a), welche mit der ersten Drehwelle (11) mechanisch gekoppelt ist, umfasst.

11. Turbomaschine (5a) nach Anspruch 10, bei der die Betätigungsvorrichtung (13) ferner einen Leistungswandler (13b) für die Stromversorgung der elektrischen Maschine (13a) umfasst.

12. Turbomaschine (5a) nach einem der vorhergehenden Ansprüche, ferner umfassend eine zweite Turbine (12), die der ersten Turbine (10) nachgeordnet und mit einer Leistungsentnahmewelle (6) mechanisch gekoppelt ist.

13. Motorsatz (4), umfassend wenigstens eine erste Turbomaschine (5a) nach einem der vorhergehenden Ansprüche und eine zweite Turbomaschine (5b).

14. Verfahren zur Wärmeregulierung eines Schmiermittels in einem Schmierkreis (14) einer Turbomaschine (5a) mit wenigstens einem Verdichter (8), einer stromab des Verdichters (8) gelegenen Brennkammer (9) für die Verbrennung eines Gemischs aus aus dem Verdichter (8) stammender Luft und aus Treibstoff, einer ersten Turbine (10) für die Entspannung von aus der Brennkammer (9) stammenden Verbrennungsgasen und den Antrieb des Verdichters (8) durch eine erste Drehwelle (11), sowie einer Vorrichtung (13) zur Betätigung der ersten Drehwelle (11), wobei das Schmiermittel, das dazu dient, wenigstens ein Lager der ersten Drehwelle (11) zu schmieren, durch eine heiße Quelle (15, 15a-15c) geleitet wird, die von dem Schmierkreis (14) durchquert ist und wenigstens einen elektrischen Verbraucher umfasst, welcher elektrische Energie wenigstens teilweise in Wärme umwandelt, um das Schmiermittel zu erwärmen, wenn die Temperatur des Schmiermittels während des In-Rotation-Haltens der ersten Turbine (10) und des Verdichters (8) durch die Betätigungsvorrichtung (13), während die Brennkammer (9) aus ist, unter eine vorbestimmte erste Schwelle sinkt.

15. Verfahren zur Wärmeregulierung nach Anspruch 14, bei dem das Schmiermittel durch eine von dem Schmierkreis (14) durchquerte kalte Quelle (18) geleitet wird, um es zu kühlen, wenn die Temperatur des Schmiermittels eine vorbestimmte zweite Schwelle überschreitet, während die Brennkammer (9) an ist.

## Claims

1. A turbomachine(5a) comprising at least:
• a compressor (8);
• a combustion chamber (9) situated downstream from the compressor (8) for combustion of a mixture of fuel and of air coming from the compressor (8);
• a first rotary shaft (11);
• a first turbine (10) for expanding the combustion gas coming from the combustion chamber (9) and driving the compressor (8) via the first rotary shaft (11);
• an actuator device (13) for actuating said first rotary shaft (11) configured to keep the first turbine (10) and the compressor (8) in rotation, in a working made, while the combustion chamber (9) is extinguished; and
• a lubrication circuit (14) for lubricating the engine (5a), arranged in such a manner as to lubricate at least one bearing of said first rotary shaft (11) and passing through at least one heat source (15, 15a-15c) including at least one electrical load, the turbomachine being **characterized by** being configured so that electrical energy, converted at least in part into heat by said at least one electrical load heats up a lubricant in said lubrication circuit (14) when the temperature of the lubricant drops below a first predetermined threshold while the first turbine (10) and the compressor (8) are rotating with the combustion chamber (9) extinguished.

2. A turbomachine (5a) according to claim 1, wherein said heat source (15, 15a, 15b) comprises said actuator device (13).

3. A turbomachine (5a) according to claim 1 or claim 2, wherein said heat source (15, 15a, 15b) includes a heat exchanger (24) for transmitting heat to the lubricant in the lubrication circuit (14).

4. A turbomachine (5a) according to any preceding claim, wherein said heat source (15, 15b, 15c) comprises an electrical resistor (29).

5. A turbomachine (5a) according to any preceding claim, wherein said lubrication circuit (14) includes a closable bypass duct (21) around the heat source (15, 15a, 15b).

6. A turbomachine (5a) according to any preceding claim, wherein said lubrication circuit (14) passes through at least two heat sources (15a-15c) suitable for heating the lubricant in said circuit (14) during rotation of the first turbine (10) and the compressor (8) with the combustion chamber (9) extinguished.

7. A turbomachine (5a) according to claim 6, wherein said two heat sources (15a, 15b) are arranged in parallel in said lubrication circuit (14).

8. A turbomachine (5a) according to claim 6, wherein said two heat sources (15a, 15b) are arranged in series in said lubrication circuit (14).

9. A turbomachine (5a) according to any preceding claim, wherein said lubrication circuit (15a, 15b) also passes through at least one heat sink (18) for cooling said lubricant when the combustion chamber (9) is lighted.

10. A turbomachine (5a) according to any preceding claim, wherein said actuator device (13) comprises an electrical machine (13a) mechanically coupled to said first rotary shaft (11).

11. A turbomachine (5a) according to claim 10, wherein said actuator device (13) further comprises a power converter (13b) for electrically powering said electrical machine (13a).

12. A turbomachine (5a) according to any preceding claim, further comprising a second turbine (12) arranged downstream from the first turbine (10) and mechanically connected to a power takeoff shaft (6).

13. A power plant (4) comprising at least a first turbomachine (5a) according to any preceding claim, and a second turbomachine (5b).

14. A method of regulating the temperature of a lubricant in a lubrication circuit (14) of a turbomachine (5a) comprising at least: a compressor (8); a combustion chamber (9) situated downstream from the compressor (8) for combustion of a mixture of fuel and of air coming from the compressor (8); a first turbine (10) for expanding combustion gas coming from the combustion chamber (9) and driving the compressor (8) via a first rotary shaft (11); and an actuator device (13) for actuating said first rotary shaft (11); wherein said lubricant for lubricating at least one bearing of said first rotary shaft (11) is directed through a heat source (15, 15a-15c) through which said lubrication circuit (14) passes and comprising at least one electrical load for converting electrical energy at least in part into heat for heating the lubricant when the temperature of the lubricant drops below a first predetermined threshold while the first turbine (10) and the compressor (8) are being kept in rotation by said actuator device (13) with the combustion chamber (9) extinguished.

15. A temperature regulation method according to claim 14, wherein said lubricant is directed through a heat sink (18) through which said lubrication circuit (14) passes in order to cool it when the temperature of the lubricant exceeds a second predetermined threshold while the combustion chamber (9) is lighted.
